# EUROPÄISCHE PATENTSCHRIFT

(11) **EP 1 288 606 B1**
(45) Veröffentlichungstag und Bekanntmachung des Hinweises auf die Patenterteilung: **22.11.2006**
(21) Anmeldenummer: 02026626.8
(22) Anmeldetag: 18.03.1998
(51) Int. Cl.: F28F 9/02

(54) **Getriebeölkühler**
Transmission oil cooler
Refroidisseur d'huile de transmission

(30) Priorität: 18.03.1997 DE 19711259
(43) Veröffentlichungstag der Anmeldung: 05.03.2003
(62) Teilanmeldung aus: 98104854.9
(73) Patentinhaber: Behr GmbH & Co. KG, 70469 Stuttgart (DE)
(72) Erfinder: Grüner, Andreas, 73110 Hattenhofen (DE); Fink, Rolf, 75428 Illingen (DE)
(74) Vertreter: Grauel, Andreas

(56) Entgegenhaltungen:
- DE-A- 2 612 416
- FR-A- 2 549 593
- FR-A- 2 582 076
- US-A- 4 538 679
- PATENT ABSTRACTS OF JAPAN vol. 017, no. 068 (M-1365), 10. Februar 1993 (1993-02-10) -& JP 04 273995 A (NIPPONDENSO CO LTD), 30. September 1992 (1992-09-30)

## Beschreibung

Die Erfindung betrifft einen Getriebeölkühler nach dem Oberbegriff des Anspruchs 1.

Getriebeölkühler dieser Art sind aus der JP-A-04 273 995 bekannt. Die in der EP 01 96 257 A1 gezeigten Getriebeölkühler sind, um den Einbauraum des Wasserkastens so klein wie möglich zu halten, mit ihren Anschlußstutzen durch seitliche Öffnungen in der Seitenwand des Wasserkastens geführt, die groß genug ausgebildet sind, um ein Schwenken der Anschlußstutzen in die Öffnungen zu ermöglichen, nachdem sie zunächst mit dem Wärmetauschkörper des Getriebeölkühlers gemeinsam von der freien Seite des Wasserkastens aus mit in der Einschieberichtung ausgerichteten Achsen eingeschoben werden. Bei diesen Bauarten muß die zunächst sehr groß ausgebildete Einführöffnung für die Anschlußstutzen anschließend von einem Deckel geschlossen werden, an dem die Anschlußstutzen befestigt werden und der mit dem übrigen Wasserkastengehäuse fest verbunden, beispielsweise verschweißt wird. Dieser Montagevorgang ist aufwendig, auch deshalb, weil an einem auf der Innenseite des Wasserkastens an den Anschlußstutzen angeordneten Ringflansch eine Dichtung vorgesehen sein muß, deren Lage während des Befestigungsvorganges der Anschlußstutzen nicht mehr kontrollierbar ist.

Der Erfindung liegt daher die Aufgabe zugrunde, einen Getriebeölkühler der eingangs genannten Art so auszubilden, daß die Montage vereinfacht ist, und daß auch keine Probleme bei der Ausrichtung eines Dichtungsringes während des Zusammenbaus auftreten.

Zur Lösung dieser Aufgabe wird ein Getriebeölkühler nach Anspruch 1 vorgeschlagen.

Weiterbildungen der Erfindung sind den Ansprüchen 2 bis 4 zu entnehmen.

Die Erfindung ist in der Zeichnung anhand von Ausführungsbeispielen dargestellt und wird im folgenden erläutert. Es zeigen:
- Fig. 1: Die Seitenansicht eines erfindungsgemäß ausgestalteten Getriebeölkühlers,
- Fig. 2: den Schnitt durch den Getriebeölkühler der Fig. 1 längs der Linie II-II,
- Fig. 3: die Stirnansicht des Getriebeölkühlers der Fig. 1 in Richtung des Pfeiles III der Fig. 1 gesehen,
- Fig. 4: eine vergrößerte Darstellung des für die Herstellung des Getriebeölkühlers nach den Fig. 1 und 2 verwendeten Gewinderinges,
- Fig. 5: eine vergrößerte Teildarstellung des linken Endes des Getriebeölkühlers der Fig. 2, jedoch im eingebauten Zustand innerhalb eines Wasserkastens eines Motorkühlers, was nicht Teil der Erfindung ist,
- Fig. 6: eine Darstellung des Anschlußbereiches ähnlich Fig. 5, was nicht Teil der Erfindung ist,
- Fig. 7: die Draufsicht auf der Fig. 6 verwendete Doppelringdichtung, wobei der in Fig. 6 gezeigte darüberliegende Flanschteil einer Hohlschraube weggelassen ist, die nicht Teil der Erfindung ist
- Fig. 8: die Darstellung eines Schnittes senkrecht zur Längsrichtung des Kühlmittelkastens bei einer Variante der Anschlußgestaltung,
- Fig. 9: einen Schnitt ähnlich Fig. 8, was nicht Teil der Erfindung ist, und
- Fig. 10: einen Schnitt ähnlich Fig. 8, was nicht Teil der Erfindung ist.

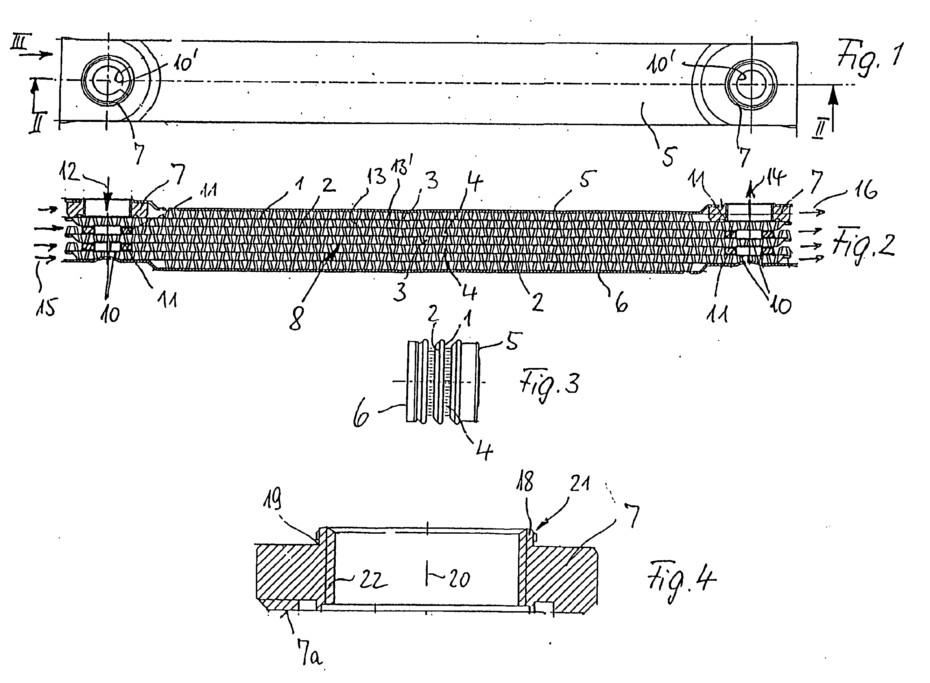

In den Fig. 1 bis 3 ist ein Getriebölkühler gezeigt, der aus mehreren parallel zueinander ausgerichteten, aber auf Abstand gehaltenen länglichen Platten 1 bzw. 2 aus Metall, insbesondere aus Aluminium, aufgebaut ist. Die Platten 1 und 2 sind jeweils in nicht näher erläuterten, weil bekannter Weise, an ihren umlaufenden Rändern dicht verbunden und bilden daher jeweils zwischen sich Kammern 3 und 4, die jeweils von verschiedenen Medien durchströmt sind. Beim Ausführungsbeispiel sind drei der Platten 1 und drei der Platten 2 vorgesehen, die nach außen hin von Endplatten 5 bzw. 6 abgedeckt werden, von denen die Platte 5 jeweils an ihren Enden abgeknickt ist und dicht mit je einem Gewindering 7 verbunden ist, der auf seiner anderen Seite dicht mit der ersten der Platten 1 verbunden ist. Die Platte 6 wiederum schließt den Wärmetauschkörper 8 des Getriebeölkühlers nach unten ab. Sie ragt dabei mit zwei Ausprägungen 9 in Öffnungen der untersten Platte 2 herein, die mit Öffnungen 10 in allen darüberliegenden Platten 1 und 2 fluchten. Die Platten 1 und 2 sind, wie vorher bereits ausgeführt, an ihren umlaufenden Rändern dicht miteinander verbunden und die so gebildeten Hohlschalen sind unter Zwischenfügung von Abstandsringen 11 aufeinandergefügt, wobei diese Abstandsringe 11 jeweils die Öffnungen 10 umgeben, so daß die auf diese Weise wechselweise zwischen den Platten 1 und 2 gebildeten Kammern 3 und 4 jeweils unterschiedliche Zu- und Abführungen besitzen. Die Zuführung zu den Kammern 3 erfolgt dabei jeweils durch die Öffnung des linken Gewinderinges 7, so, daß im Sinn des Pfeiles 12 das zu kühlende Öl jeweils in alle Kammern 3 eintreten kann, die untereinander durch die Öffnungen 10 in Verbindung stehen. Von dort aus kann das Öl dann durch die Kammern 3, die in bekannter Weise mit Turbulenzeinlagen 13 ausgestattet sind, nach rechts fließen und im Sinn des Pfeiles 14 wieder aus dem Wärmetauschkörper 8 austreten.

Kühlmittel wird beim Ausführungsbeispiel jeweils durch die offenen Stirnenden der Kammern 4 im Sinn der Pfeile 15 eintreten und es kann diese Kammern im Sinn der Pfeile 16 wieder verlassen. Dabei besteht durch die Anordnung der Abstandsscheiben 11 eine Abdichtung zwischen Öl und Kühlmittel.

Die Fig. 4 zeigt, daß jeder der Gewinderinge 7 mit der obersten der Scheiben 1 verbunden ist und auf der von seiner Fläche 7a abgewandten Seite einen konzentrischen Kragen 18 besitzt, an dessen Fuß eine kleine umlaufende Nut 19 vorgesehen ist. Der Kragen 18 bildet ferner eine umlaufende, von der Achse 20 des Gewinderinges 7 nach außen schräg abfallende Ringfläche 21, auf deren Bedeutung später noch eingegangen wird. Im Inneren besitzt der Gewindering 7 ein Gewinde 22.

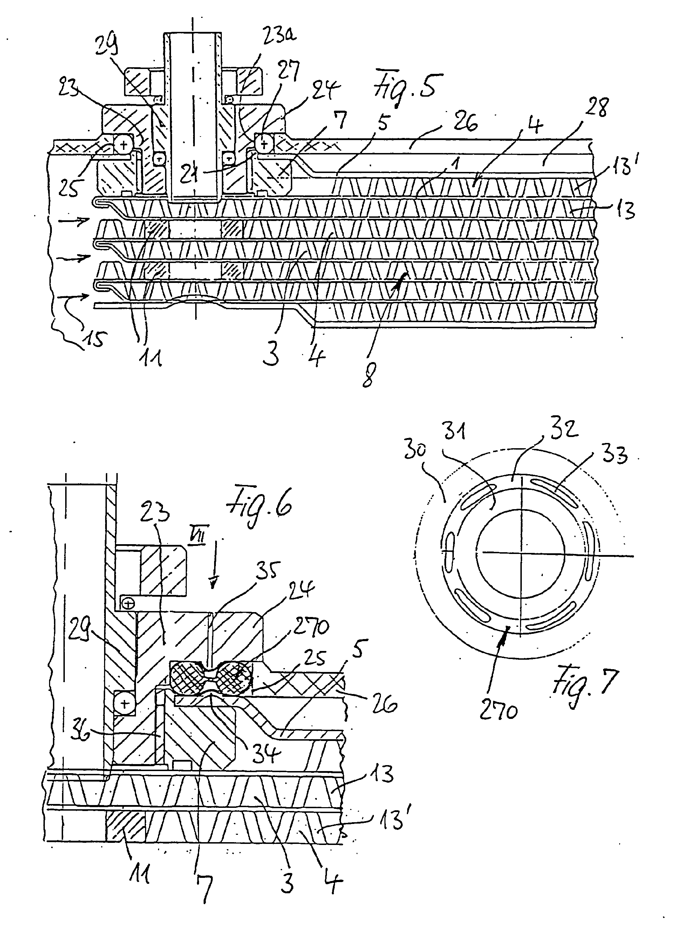

Wie Fig. 5 zeigt, ist in diesen Gewindering eine Hohlschraube 23 eingesetzt, die mit ihrem Flanschteil 24 eine Öffnung 25 in einer Seitenwand 26 eines nicht näher dargestellten Wasserkastens eines Motorkühlers überdeckt. In die Öffnung 25 ist ein Dichtungsring 27 eingesetzt, der von dem Flansch 24 der Hohlschraube 23 gegen die Außenfläche der Abdeckplatte 5 und gegen die Ringfläche 21 des Gewinderinges 7 gedrückt ist. Durch den Dichtungsring 27 kann daher in einfacher Weise eine Abdichtung gegenüber den von Kühlwasser durchströmten Kammern 4 des Wärmetauschkörpers 8 des Getriebeölkühlers und eine Abdichtung zu dem Innenraum 28 des nicht näher gezeigten Wasserkastens erreicht werden. Die Fig. 5 läßt auch gut erkennen, daß die Abdichtscheiben 11 jeweils die aneinanderliegenden Kammern 3 und 4 gegeneinander abdichten, so daß die vorher erwähnte wechselweise Durchströmung der Kammern 3 und 4 von Öl und Kühlmittel erreicht wird.

Die Fig. 5 zeigt auch, daß die Hohlschraube 23 als ein Einsteckstutzen für einen Steckzapfen 29 einer Schnellkupplung ausgebildet ist, die wiederum mit Dichtungsringen am Steckzapfen 29 zur dichten Verbindung mit der Hohlschraube 23 versehen ist. Durch diese Ausgestaltung wird die fertige Montage des Getriebeölkühlers im Wasserkasten ermöglicht. Der Ölanschluß kann später erfolgen.

Die Fig. 6 und 7, in denen für gleiche Teile auch gleiche Bezugszeichen verwendet worden sind, zeigen einem Ölkühler nicht nach der erfindung, die hinsichtlich des verwendeten Dichtringes von jener der Fig. 1 bis 5 abweicht. Anstelle des Dichtringes 27 ist bei dem Ölkühler der Fig. 6 und 7 ein Doppeldichtring 270 vorgesehen, der zwei konzentrisch zueinander angeordnete Toruskörper 30 und 31 aus einem elastischen Material besitzt, die untereinander durch einen Flachring 32 verbunden sind, der mit Durchtrittsöffnungen 33 in der Form von gleichmäßig auf dem Umfang verteilten Langlöchern versehen ist. Dieser Doppeldichtring 270 wird auf einer umlaufenden Ausprägung 34 gehalten, die von dem Außenblech 5 des Getriebeölkühlers im Bereich der Öffnung 25 in der Wand 26 gebildet wird. Auch der Doppelring 270 kann daher bei der Montage des Getriebeölkühles in sehr einfacher Weise von außen eingelegt und zentriert werden und danach, wenn die Hohlschraube 23 angezogen wird, sicher gehalten werden. Hier sind in dem Flansch 24 umlaufende Bohrungen 35 in dem Bereich vorgesehen, in dem der Verbindungsring 32 vorgesehen ist. Durch diese Ausgestaltung kann Kühlmittel oder auch Getriebeöl, das möglicherweise durch das Gewinde 36 zwischen dem Gewindering 7 und der Hohlschraube 23 durchdringen könnte, dann, wenn es auch noch den inneren Dichtring 31 passiert hat, über die Bohrungen 35 nach außen abgeführt werden, so daß eine Vermischung von Kühlmittel und Öl innerhalb des Getriebeölkühlers ausgeschlossen wird.

Wie vorher erwähnt, sind die Kammern 3 jeweils mit Turbulenzeinlagen 13 versehen. Die Kammern 4 sind mit ähnlichen oder gleichen Turbulenzeinlagen 13' ausgerüstet.

Die Fig. 8 zeigt nun in einem Schnitt senkrecht zu der Längsrichtung des Wasser- oder Kühlmittelkastens, d.h. also senkrecht zu den Schnittdarstellungen der Figuren 5 oder 6, den Querschnitt des Kühlmittelkastens 40, in dessen Seitenwand 26 der Anschluß für das zu kühlende Öl eingesetzt ist. Der Wärmeübertragungskörper 8 des Ölkühlers ist im Prinzip gleich oder ähnlich zu jenem der vorausgegangenen Figuren aufgebaut. Auch er besteht aus übereinander angeordneten Scheiben 1 und 2 mit dazwischen angeordneten Turbulenzblechen. Fig. 8 läßt aber auch erkennen, daß in einem Boden 42 des Kühlmittelkastens 40 Flachrohre 41 münden, die vom Kühlmittel durchströmt werden, das auch den Wärmeübertragungskörper 8 des Ölkühlers umfließt.

Die Fig. 8 zeigt nun eine Ausgestaltung der Erfindung, bei der ein Gewindering 43, der auf der Innenseite des Kühlmittelkastens 40 mit einem Flansch 43a und mit einer Dichtung 44 an der Seitenwand 26 anliegt, mit seinem durch die Seitenwand 26 hindurchragenden Gewindeteil mit einer Hohlschraube 45 verschraubt ist. Der Gewindeschaft des Gewinderinges 43 bildet dabei auf seiner Innenseite einen Einsteckstutzen für den Steckzapfen 46 einer Schnellkupplung. Der Steckzapfen 46 ist mit einem Dichtungsring 47 versehen, mit dem er am Einsteckstutzenteil des Gewinderings 43 dicht anliegt. Der Steckzapfen 46 ist außerdem mit einer umlaufenden Nut 48 versehen, in die eine federnde Gabel 49 eingreift, die von außen durch entsprechende Schlitzöffnungen in der Hohlschraube 45 zur Sicherung des Steckzapfens 46 hindurchgesteckt ist. Der Steckzapfen 46 kann einen rechtwinklig abragenden Anschlußteil in der Form eines metallischen Rohres haben. Natürlich ist es auch möglich, den Anschluß durch ein koaxial zu der Achse 51 des Steckzapfens 46 verlaufendes Rohrteil 50' nach außen zu führen.

Diese Ausgestaltung bietet den Vorteil, daß auf einen aufwendigen Schraubanschluß von Ölzuführungsrohren verzichtet werden kann. Auch die umständliche Montage eines aufgesteckten Anschlußschlauches, der für den Ölanschluß in neuerer Zeit auch nicht mehr vorgesehen ist, kann entfallen. Die Montage der Ölanschlüsse erfolgt in einfacher Weise nach dem Einbau des Kühlers durch einstecken der Steckzapfen 46 und deren Sicherung.

Die Fig. 9 zeigt eine Abwandlung die nicht Teil der Erfindung ist, insofern, als hier der Steckzapfen 46 in einen Einsteckstutzen 51 eingeschoben ist, der hier ein Teil der mit dem Gewindering 52 verschraubten Hohlschraube 53 ist. Diese Hohlschraube 53 greift hier mit ihrem Ansatz 51 in ein Innengewinde des Gewinderings 52 ein und drückt dessen Dichtung 44 fest gegen die Seitenwand 26 des Kühlmittelkastens 40. Die Hohlschraube 53 ist auch hier mit Steckschlitzen zum Einsetzen der Sicherungsgabel 49 versehen, welche die Lagesicherung des Steckzapfens 46 übernehmen.

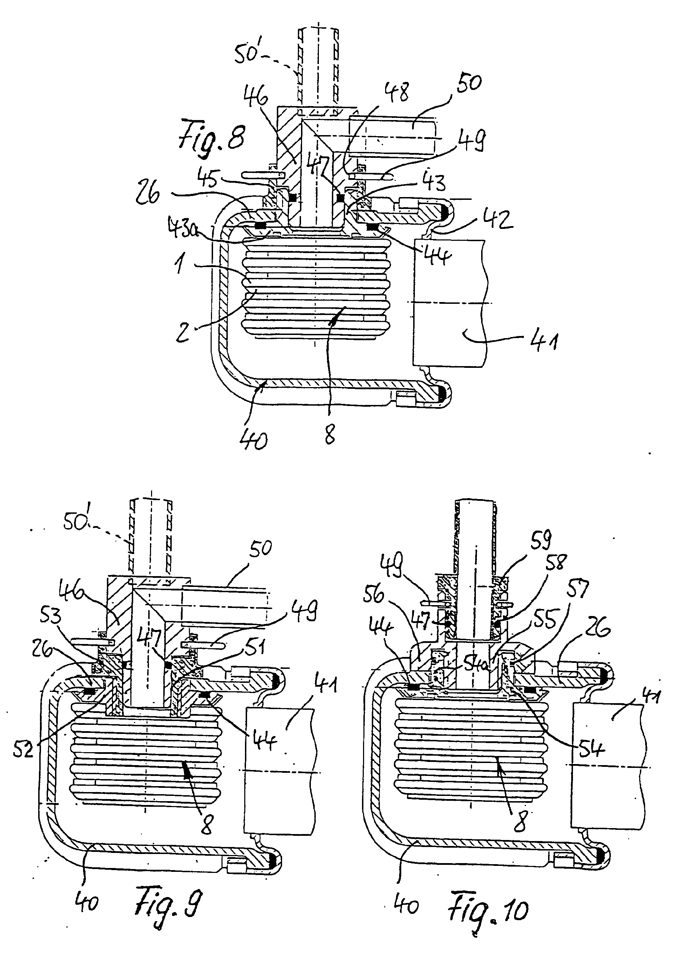

Die Fig. 10 zeigt einen Ölkühler, der nicht Teil der erfindung ist, als hier der mit der Dichtung 44 versehene Gewindering 54 einen durch die Seitenwand 26 hindurchragenden Ansatz aufweist, der über ein Innengewinde mit dem Außengewinde eines Ansatzes 55 der Hohlschraube verschraubt ist. Die Hohlschraube besitzt in diesem Fall noch einen Kragen 56, der den Stutzen 54a des Gewinderinges 54 außen übergreift. Dabei kann der Stutzen 54a auch noch mit einer außen umlaufenden Dichtung 57 versehen sein, die sich an den Überwurfkragen 56 anlegt. Die Hohlschraube ist außerdem an einem nach außen führenden Ansatz 58 wieder mit den Steckschlitzen zur Führung der Sicherungsgabel 49 versehen, so daß der Steckzapfen 59 auch hier als Teil einer Schnellkupplung lagegesichert werden kann.

## Patentansprüche

1. Getriebeölkühler mit einem länglichen Wärmeübertragungskörper, der zum Einbau in den Innenraum eines Kühlmittelkastens eines Motorkühlers mit seitlich abragenden Anschlußstutzen versehen ist, die mit je einer Schraubflanschordnung abgedichtet in einer Öffnung einer Seitenwand des Kühlmittelkastens befestigbar sind, wobei die Schraubflanschanordnung aus einem fest mit dem Wärmeübertragungskörper (8) verbundenen Gewindering (43) und einer mit diesem verschraubbaren Hohlschraube (45) besteht und **dadurch gekennzeichnet, daß** der Gewindering als Einsteckstutzen für einen Steckzapfen (46) einer Schnellkupplung ausgebildet ist.

2. Getriebeölkuhler nach Anspruch 1, **dadurch gekennzeichnet, daß** der Hohlschraube eine Nut (48) zur Aufnahme einer Sicherungsgabel (49) des Steckzapfens (46) zugeordnet ist.

3. Getriebölkühler nach Anspruch 2, **dadurch gekennzeichnet, daß** die Nut außen an der Hohlschraube angeordnet ist.

4. Getriebeölkühler nach einem der Ansprüche 1 bis 3, **dadurch gekennzeichnet, daß** der Gewindering mit einem Ansatz durch die Öffnung der Seitenwand (26) hindurchgreift und innerhalb des Ansatzes als Einsteckstutzen ausgebildet ist.

## Claims

1. A transmission oil cooler having an elongated heat transfer element which, in order to be fitted in the interior of a coolant reservoir of an engine radiator, is provided with laterally projecting connectors which can each be fixed in an opening in a side wall of the coolant reservoir and sealed by means of a screwed flange arrangement, said screwed flange arrangement consisting of a ring nut (43) which is connected in a fixed manner to the heat transfer element (8) and a banjo bolt (45) which can be screwed to said ring nut (43),
**characterised in that**
the ring nut (43) is designed as a plug-in connector for a plug-in pin (46) of a quick-fit coupling.

2. A transmission oil cooler in accordance with claim 1,
**characterised in that**
associated with the banjo bolt (45) is a channel (48) for receiving a safety fork (49) on the plug-in pin (46).

3. A transmission oil cooler in accordance with claim 2,
**characterised in that**
the channel (48) is positioned on the outside of the banjo bolt (45).

4. A transmission oil cooler in accordance with one of claims 1 to 3,
**characterised in that**
a projection on the ring nut passes through the opening in the side wall (26) and inside the projection the ring nut is designed as a plug-in connector.

## Revendications

1. Refroidisseur d'huile de transmission, comportant un corps d'échangeur thermique allongé qui, en vue du montage à l'intérieur d'une boîte à fluide de refroidissement d'un radiateur de moteur, est muni de manchons de raccordement en saillie latérale, qui sont aptes à être fixés de manière étanche, chacun au moyen d'un système de collerette vissée, dans un orifice d'une paroi latérale de la boîte à fluide de refroidissement, le système de collerette vissée étant formé par une bague filetée (43), reliée fermement au corps d'échangeur thermique (8), et un boulon creux (45), destiné à être vissé à ladite bague, **caractérisé en ce que** la bague filetée est réalisée sous forme de manchon d'enfichage pour un tenon à enficher (46) d'un raccord rapide.

2. Refroidisseur d'huile de transmission selon la revendication 1, **caractérisé en ce qu'**une gorge (48), destinée à recevoir une fourche de blocage (49) du tenon à enficher (46), est associée au boulon creux.

3. Refroidisseur d'huile de transmission selon la revendication 2, **caractérisé en ce que** la gorge est réalisée à l'extérieur sur le boulon creux.

4. Refroidisseur d'huile de transmission selon l'une quelconque des revendications 1 à 3, **caractérisé en ce que** la bague filetée passe avec une saillie à travers l'orifice de la paroi latérale (26) et, à l'intérieur de la saillie, est réalisée sous forme de manchon d'enfichage.
